# EUROPÄISCHE PATENTSCHRIFT

(11) **EP 2 822 827 B1**
(45) Veröffentlichungstag und Bekanntmachung des Hinweises auf die Patenterteilung: **05.12.2018**
(21) Anmeldenummer: 13700398.4
(22) Anmeldetag: 17.01.2013
(51) Int. Cl.: B60T 13/66, B60T 13/74, G05D 13/00, H02P 23/00

(54) **VERFAHREN ZUM BETREIBEN EINES BREMSKRAFTVERSTÄRKERS EINES FAHRZEUGS UND STEUERVORRICHTUNG FÜR EINEN BREMSKRAFTVERSTÄRKER EINES FAHRZEUGS**
METHOD FOR OPERATING A BRAKE FORCE BOOSTER OF A VEHICLE, AND CONTROL DEVICE FOR A BRAKE FORCE BOOSTER OF A VEHICLE
PROCÉDÉ DE FONCTIONNEMENT D'UN SERVOFREIN D'UN VÉHICULE ET DISPOSITIF DE COMMANDE POUR UN SERVOFREIN D'UN VÉHICULE

(30) Priorität: 08.03.2012 DE 102012203698
(43) Veröffentlichungstag der Anmeldung: 14.01.2015
(73) Patentinhaber: Robert Bosch GmbH, 70442 Stuttgart (DE)
(72) Erfinder: VOLLERT, Herbert, 71665 Vaihingen/Enz (DE); GERDES, Manfred, 71665 Vaihingen/Enz (DE)
(86) Internationale Anmeldenummer: PCT/EP2013/050771
(87) Internationale Veröffentlichungsnummer: WO 2013/131669

(56) Entgegenhaltungen:
- WO-A1-2011/154369
- DE-A1- 10 327 553
- DE-A1-102009 045 415

## Beschreibung

Die Erfindung betrifft ein Verfahren zum Betreiben eines Bremskraftverstärkers eines Fahrzeugs. Des Weiteren betrifft die Erfindung eine Steuervorrichtung für einen Bremskraftverstärker eines Fahrzeugs.

### Stand der Technik

In der DE 103 27 553 A1 ist ein elektromechanischer Bremskraftverstärker beschrieben. Der Bremskraftverstärker kann mit einem Sensor zum Erfassen einer an einer Kolbenstange wirksamen Pedalkraft zusammenwirken. In diesem Fall kann der Strom des Elektromotors mit einem Verstärkungsfaktor proportional zur erfassten Pedalkraft eingestellt werden. Außerdem kann der Verstärkungsfaktor in Abhängigkeit einer Fahrgeschwindigkeit eines mit dem elektromechanischen Bremskraftverstärker ausgestatteten Fahrzeugs variabel eingestellt werden.

Außerdem sind in der DE 10 2009 045 415 A1 ein Verfahren zum Betreiben eines bremskraftverstärkten Bremssystems eines Fahrzeugs und eine Steuervorrichtung für ein bremskraftverstärktes Bremssystem eines Fahrzeugs beschrieben. In beiden Fällen wird durch Nachfahren eines Motors des bremskraftverstärkten Bremssystems ein Differenzweg zwischen einem Eingangskolben und einem Unterstützungskolben des bremskraftverstärkten Bremssystems auf Null geregelt.

### Offenbarung der Erfindung

Die Erfindung schafft ein Verfahren zum Betreiben eines Bremskraftverstärkers eines Fahrzeugs mit den Merkmalen des Anspruchs 1 und eine Steuervorrichtung für einen Bremskraftverstärker eines Fahrzeugs mit den Merkmalen des Anspruchs 8.

### Vorteile der Erfindung

Die vorliegende Erfindung ermöglicht eine vorteilhafte Betriebsweise eines Bremskraftverstärkers. Durch das Ansteuern des Bremskraftverstärkers mittels des Ansteuersignals, welches unter Berücksichtigung des bei Beachtung der Verstellgeschwindigkeit der Eingangsstange festgelegten Soll-Verstellgeschwindigkeitssignals vorgebbar ist, ist verlässlich gewährleistet, dass bei einer schnellen Bremsanforderung des Fahrers rasch mittels einer signifikanten Zunahme des in dem Hauptbremszylinder vorliegenden Bremsdrucks reagiert werden kann. Deshalb kann insbesondere bei einer plötzlichen und schnell ausgeführten Betätigung des Bremsbetätigungselements der Bremsdruck in dem Hauptbremszylinder und dem mindestens einen angebundenen Bremskreis signifikant gesteigert werden. Somit ist insbesondere in Verkehrssituationen, in welchen der Fahrer ein rasches Abbremsen des Fahrzeugs wünscht, dies verlässlich ausführbar. Die vorliegende Erfindung gewährleistet somit einen vorteilhaften Bremskomfort für den Fahrer.

Außerdem stellt die vorliegende Erfindung Möglichkeiten bereit, mittels welchen das vorteilhafte Betreiben des Bremskraftverstärkers unter Verwendung von kostengünstigen und wenig Bauraum beanspruchenden Elektronikkomponenten ausführbar ist. Somit ist der in dem vorausgehenden Absatz beschriebene realisierbare Bremskomfort für den Fahrer zu geringen Kosten und ohne eine Steigerung eines Bauraumbedarfs oder eines Fahrzeuggesamtgewichts bewirkbar.

Durch das vorteilhafte Herausfiltern von hochfrequenten und/oder niederfrequenten Signalanteilen aus dem festgelegten Ist-Verstellgeschwindigkeitssignal ist außerdem gewährleistet, dass kurzzeitig auftretende Störsignale keinen Einfluss auf den Betrieb des Bremskraftverstärkers haben. Das erfindungsgemäße Verfahren und die korrespondierende Steuervorrichtung erlauben somit eine feinfühlige Bedienung des Bremskraftverstärkers (angepasst an die Betätigung des Bremsbetätigungselements durch den Fahrer), wobei gleichzeitig systemdynamische Probleme, wie ein Einschwingverhalten und/oder Schwingungen, unterbunden sind.

Es wird insbesondere darauf hingewiesen, dass die vorliegende Erfindung eine Betätigung des Bremsbetätigungselements durch den Fahrer, wie beispielsweise eine Pedalbedienung, ohne negative Aspekte ermöglicht, wobei ein gutes und schnelles Ansprechen des Bremskraftverstärkers gewährleistet ist. Wie unten genauer ausgeführt wird, ermöglicht die vorliegende Erfindung auch ein optimales dynamisches Verhalten des Bremskraftverstärkers.

In einer vorteilhaften Ausführungsform wird zum Festlegen des Ansteuersignals ein Soll-Drehgeschwindigkeitssignal bezüglich einer Soll-Drehgeschwindigkeit eines Motors des Bremskraftverstärkers zumindest unter Berücksichtigung des festgelegten Soll-Verstellgeschwindigkeitssignals und einer Getriebe-Übersetzung-Kennlinie eines Getriebes des Bremskraftverstärkers festgelegt. Das Festlegen des Soll-Verstellgeschwindigkeitssignals kann somit auch ohne eine Berücksichtigung der Charakteristik des Getriebes des Bremskraftverstärkers erfolgen. Die Elektronik zum Festlegen des Soll-Verstellgeschwindigkeitssignals kann somit für eine Vielzahl von Bremskraftverstärkern mit verschiedenen Getriebeeinrichtungen angewandt werden. Trotzdem ist durch das anschließende Festlegen der Soll-Drehgeschwindigkeit unter Berücksichtigung der (spezifischen) Getriebe-Übersetzung-Kennlinie gewährleistet, dass das an den Bremskraftverstärker ausgegebene Ansteuersignal bezüglich seines Getriebes optimiert ist.

Außerdem kann zum Festlegen des Ansteuersignals ein Soll-Drehmomentsignal bezüglich eines Soll-Drehmoments des Motors des Bremskraftverstärkers zumindest unter Berücksichtigung des festgelegten Soll-Drehgeschwindigkeitssignals und einer Drehgeschwindigkeit-Drehmoment-Kennlinie des Motors festgelegt werden. Somit ist der in dem vorausgehenden Absatz beschriebene Vorteil auch auf eine Vielzahl von Bremskraftverstärkern mit unterschiedlichen Charakteristiken bezüglich einer Umsetzung eines Drehmoments in eine Drehgeschwindigkeit des Motors des Bremskraftverstärkers erstreckbar.

Des Weiteren kann als Ansteuersignal ein Ansteuerstromsignal des Motors des Bremskraftverstärkers zumindest unter Berücksichtigung des festgelegten Soll-Drehmomentsignals und einer Stromversorgung-Drehmoment-Kennlinie des Motors festgelegt werden. Das Ansteuern des Motors des Bremskraftverstärkers kann somit mittels eines einfach und verlässlich festlegbaren Ansteuersignals erfolgen.

In einer vorteilhaften Weiterbildung wird das Soll-Drehmomentsignal bezüglich des Soll-Drehmoments des Motors des Bremskraftverstärkers unter zusätzlicher Berücksichtigung eines aktuell gemessenen Ist-Drehgeschwindigkeitssignals des Motors des Bremskraftverstärkers festgelegt. Das Ansteuern des Bremskraftverstärkers kann somit bezüglich einer aktuellen Funktionsweise des Motors des Bremskraftverstärkers optimiert werden.

In einer weiteren vorteilhaften Ausführungsform wird ein Verstellwegsignal bezüglich eines Verstellwegs der Eingangsstange gemessen und das Ist-Verstellgeschwindigkeitssignal wird als zeitliche Differenz des Verstellwegsignals festgelegt. Somit kann eine Vielzahl von kostengünstigen Sensoren, wie beispielsweise ein magnetischer Stangenwegsensor, zum Festlegen des Ist-Verstellgeschwindigkeitssignals genutzt werden.

Die hochfrequenten und/oder niederfrequenten Signalanteile können beispielsweise mittels eines Glättungsfilters, eines Bandpassfilters, eines Kreuzbandfilters, eines Hochpassfilters und/oder eines Tiefpassfilters aus dem festgelegten Ist-Verstellgeschwindigkeitssignal herausgefiltert werden. Somit können zum Filtern des festgelegten Ist-Verstellgeschwindigkeitssignals kostengünstige Filter eingesetzt werden.

Die in den vorausgehenden Absätzen beschriebenen Vorteile sind auch bei einer entsprechenden Steuervorrichtung für einen Bremskraftverstärkers eines Fahrzeugs gewährleistet.

Außerdem realisieren auch ein Bremskraftverstärker für ein Bremssystem eines Fahrzeugs und ein Bremssystem für ein Fahrzeug, welche mit einer derartigen Steuervorrichtung ausgestattet sind, die oben aufgezählten Vorteile.

### Kurze Beschreibung der Zeichnungen

Weitere Merkmale und Vorteile der vorliegenden Erfindung werden nachfolgend anhand der Figuren erläutert. Es zeigen:
- Fig. 1: eine schematische Darstellung einer ersten Ausführungsform des Verfahrens zum Betreiben eines Bremskraftverstärkers;
- Fig. 2: eine schematische Darstellung einer zweiten Ausführungsform des Verfahrens zum Betreiben eines Bremskraftverstärkers; und
- Fig. 3: eine schematische Darstellung einer Ausführungsform der Steuervorrichtung.

### Ausführungsformen der Erfindung

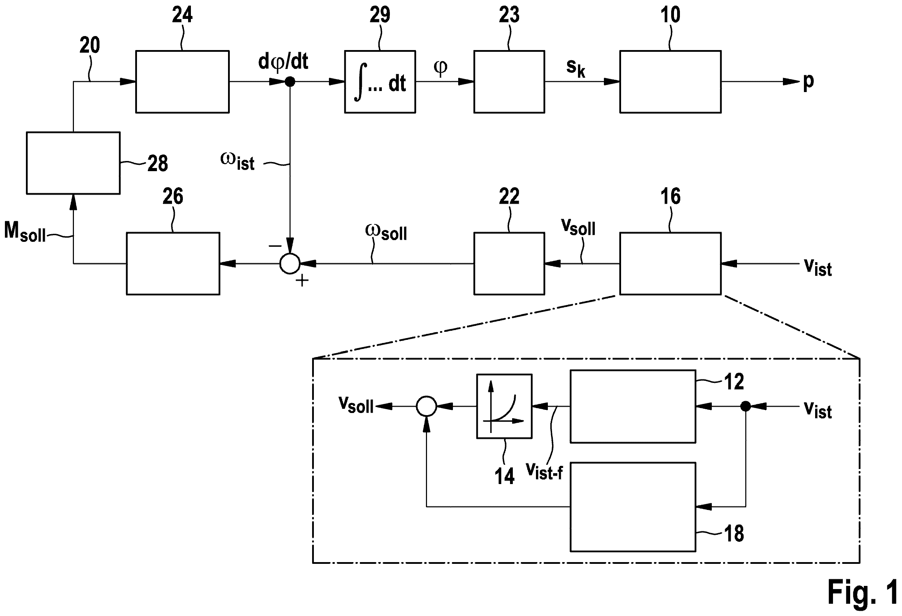

Fig. 1 zeigt eine schematische Darstellung einer ersten Ausführungsform des Verfahrens zum Betreiben eines Bremskraftverstärkers.

Das in Fig. 1 schematisch dargestellte Verfahren ist zum Betreiben eines Bremskraftverstärkers eines Fahrzeugs einsetzbar. Im Weiteren wird das Verfahren so ausgeführt, dass mittels des Verfahrens ein elektromechanischer/elektrisch betriebener Bremskraftverstärker betrieben wird. Es wird jedoch darauf hingewiesen, dass die Ausführbarkeit des Verfahrens nicht auf das Betreiben eines derartigen Bremskraftverstärkers limitiert ist. Der betriebene Bremskraftverstärker kann beispielsweise auch ein pneumatischer Bremskraftverstärker oder ein hydraulischer Bremskraftverstärker sein. Anstelle einer elektronischen Verstärkung mittels eines elektromechanischen/elektromotorischen Bremskraftverstärkers kann z.B. auch ein aktiver Bremskraftverstärker eingesetzt werden, bei welchem eine auf mindestens einen verstellbaren Kolben eines Hauptbremszylinders 10 ausgeübte Verstärkungskraft des Bremskraftverstärkers über Ventile beeinflusst wird. Das Beschreiben des Verfahrens im Bezug auf einen elektromechanischen/elektromotorischen Bremskraftverstärker geschieht hier lediglich aufgrund der Vorteile eines derartigen Bremskraftverstärkers gegenüber anderen Bremskraftverstärkertypen. Ein elektromechanischer/elektromotorischer Bremskraftverstärker ist trocken und benötigt somit keine Hydraulik am Fahrerfuß. Ebenso benötigt ein elektromechanischer/elektromotorischer Bremskraftverstärker keine pneumatische Unterdruckversorgung, ist bei einem abgeschalteten Verbrennungsmotor einsetzbar und kann weitgehend elektronisch abgestimmt und geregelt werden.

In einem Verfahrensschritt des im Weiteren beschriebenen Verfahrens wird ein Ist-Verstellgeschwindigkeitssignal vᵢₛₜ bezüglich einer Ist-Verstellgeschwindigkeit einer Eingangsstange, auf welche eine auf ein Bremsbetätigungselement ausgeübte Fahrerbremskraft zumindest teilweise übertragen wird, festgelegt. Das Bremsbetätigungselement kann beispielsweise ein Bremspedal sein. Es wird darauf hingewiesen, dass die Ausführbarkeit des Verfahrens nicht auf einen bestimmten Typ einer (stangenförmigen) Eingangsstange limitiert ist. Somit kann unter der Eingangsstange auch eine nicht-stangenförmige Kraftübertragungskomponente verstanden werden, mittels welcher die Fahrerbremskraft direkt oder indirekt auf den mindestens einen verstellbaren Kolben des Hauptbremszylinders 10 übertragbar ist.

Zum Festlegen des Ist-Verstellgeschwindigkeitssignals vᵢₛₜ kann beispielsweise ein Verstellwegsignal bezüglich eines Verstellwegs der Eingangsstange gemessenen werden. Bevorzugter Weise erfolgt dies mittels eines kostengünstigen und wenig Bauraum beanspruchenden magnetischen Sensors, wie insbesondere eines Stangenwegsensors. Anschließend kann das Ist-Verstellgeschwindigkeitssignal vᵢₛₜ als zeitliche Differenz/Ableitung des Verstellwegsignals festgelegt werden. Die dazu einsetzbare Elektronik ist kostengünstig, weist ein geringes Gewicht auf und benötigt vergleichsweise wenig Bauraum. Alternativ kann das Ist-Verstellgeschwindigkeitssignals vᵢₛₜ auch durch ein direktes Messen mittels eines Geschwindigkeitssensors festgelegt werden.

Nach dem Festlegen des Ist-Verstellgeschwindigkeitssignals vᵢₛₜ werden hochfrequente und/oder niederfrequente Signalanteile aus dem festgelegten Ist-Verstellgeschwindigkeitssignal vᵢₛₜ herausgefiltert. Die hochfrequenten und/oder niederfrequenten Signalanteile können beispielsweise mittels eines Glättungsfilters, eines Bandpassfilters, eines Kreuzbandfilters, eines Hochpassfilters und/oder eines Tiefpassfilters 12 aus dem festgelegten Ist-Verstellgeschwindigkeitssignal vᵢₛₜ herausgefiltert werden. Die Darstellung lediglich des Tiefpassfilters 12 in Fig. 1, welcher mittels der Filterkennlinie 1: (1+s*T_{Low}) umschreibbar ist, (wobei T_{Low} die Filtergrenze wiedergibt) ist nicht so zu interpretieren, dass nicht weitere oder mehrere Filter zum Ausführen des hier beschriebenen Verfahrensschritts einsetzbar sind.

Anschließend erfolgt ein Festlegen eines Soll-Verstellgeschwindigkeitssignals vₛₒₗₗ bezüglich einer Soll-Verstellgeschwindigkeit zumindest eines mittels des Bremskraftverstärkers verstellbaren Verstärkerkolbens zumindest unter Berücksichtigung einer vorgegebenen Kennlinie 14 und dem gefilterten Ist-Verstellgeschwindigkeitssignal V_{ist-f}. Die Kennlinie 14 ist eine (vorteilhafte) Relation der Soll-Verstellgeschwindigkeit des verstellbaren Verstärkerkolbens von einer festgelegten und gefilterten Ist-Verstellgeschwindigkeit der Eingangsstange. Es wird darauf hingewiesen, dass die Ausführbarkeit des Verfahrens nicht auf einen bestimmten Typ einer Kennlinie 14 limitiert ist. Ebenso ist die Ausführbarkeit des Verfahrens nicht auf einen bestimmten Typ eines (stangenförmigen/kolbenförmigen) Verstärkerkolbens limitiert. Unter dem Verstärkerkolben kann somit auch eine nicht-kolbenförmige Kraftübertragungskomponente verstanden werden, mittels welcher die Verstärkerkraft des Bremskraftverstärkers direkt oder indirekt auf den mindestens einen verstellbaren Kolben des Hauptbremszylinders 10 übertragbar ist.

In der Ausführungsform der Fig. 1 wird in einem als Zieldefinition (Target-Definition) 16 bezeichenbaren Verfahrensschritt sowohl das Herausfiltern von hochfrequenten und/oder niederfrequenten Signalanteilen als auch das Festlegen des Soll-Verstellgeschwindigkeitssignals vₛₒₗₗ ausgeführt. Als vorteilhafte Weiterbildung umfasst die Zieldefinition 16 neben dem Filtern und dem Umrechnen des Ist-Verstellgeschwindigkeitssignals vᵢₛₜ der Eingangsstange auch das Ausführen einer gefilterten Vorschausteuerung 18. Das hier beschriebene Verfahren ist jedoch nicht auf das Ausführen einer gefilterten Vorschausteuerung 18, beispielsweise entsprechend der Vorschausteuerungs-Kennlinie (1+x*T_{preview})/(1+s*T_{PVF}), limitiert.

Das hier wiedergegebene Verfahren ermöglicht somit die Nutzung des festgelegten Ist-Verstellgeschwindigkeitssignals vᵢₛₜ /der Geschwindigkeit der Eingangsstange des Bremssystems zum Nachführen der Arbeitsgeschwindigkeit des Bremskraftverstärkers durch Festlegen eines entsprechenden Soll-Verstellgeschwindigkeitssignals vₛₒₗₗ/einer entsprechenden Soll-Verstellgeschwindigkeit. Die Sollwertberechnung zum Festlegen des Soll-Verstellgeschwindigkeitssignals vₛₒₗₗ des Bremskraftverstärkers ist einfach ausführbar. Die ausgeführte Sollwertbildung kann anschließend zur Regelung der Bremskraftverstärkung des Bremskraftverstärkers genutzt/weiterverarbeitet werden.

Dazu wird ein Ansteuersignal 20 des Bremskraftverstärkers festgelegt. Das Festlegen des Ansteuersignals 20 des Bremskraftverstärkers erfolgt zumindest unter Berücksichtigung des festgelegten Soll-Verstellgeschwindigkeitssignals vₛₒₗₗ. Danach wird das festgelegte Ansteuersignal 20 an den Bremskraftverstärker ausgegeben, wodurch der Bremskraftverstärker so angesteuert wird, dass zumindest der Verstärkerkolben mit einer dem Ansteuersignal 20 entsprechenden Ausführungs-Geschwindigkeit verstellt wird. Durch das Verstellen des Verstärkerkolbens mit der Ausführungs-Geschwindigkeit wird eine Verstärkerkraft des Bremskraftverstärkers auf den mindestens einen verstellbaren Kolben des Hauptbremszylinders 10 übertragen. Der mindestens eine verstellbare Kolben des Hauptbremszylinders 10 ist somit zumindest mit einer Summe aus der Fahrerbremskraft und der Verstärkerkraft des Bremskraftverstärkers verstellbar. Das Ausführen des hier beschriebenen Verfahrens bietet somit eine kraftmäßige Unterstützung des Fahrers während eines Abbremsens seines Fahrzeugs.

Die als Soll-Verstellgeschwindigkeitssignal vₛₒₗₗ umgerechnete Geschwindigkeit der Eingangsstange/das umgerechnete Ist-Verstellgeschwindigkeitssignal vᵢₛₜ kann als Sollwert zum Einregeln des Bremskraftverstärkers verwendet werden. Vorzugsweise geschieht dies, indem zum Festlegen des Ansteuersignals 20 ein Soll-Drehgeschwindigkeitssignal ωₛₒₗₗ bezüglich einer Soll-Drehgeschwindigkeit eines Motors 24 des als elektromechanischer Bremskraftverstärker ausgebildeten Bremskraftverstärkers zumindest unter Berücksichtigung des festgelegten Soll-Verstellgeschwindigkeitssignals vₛₒₗₗ und einer Getriebe-Übersetzung-Kennlinie 22 eines Getriebes 23 des Bremskraftverstärkers festgelegt wird. Die oben beschriebene Zieldefinition 16 kann somit für eine Vielzahl von Bremskraftverstärkern mit verschiedenen ausgebildeten Getriebecharakteristiken genutzt werden. Gleichzeitig kann mittels des hier beschriebenen Verfahrensschritts das Ansteuersignal 20 bezüglich des Getriebes 23 des angesteuerten Bremskraftverstärkers optimiert werden.

Zum Festlegen des Ansteuersignals 20 wird vorzugsweise auch das Soll-Drehmomentsignal Mₛₒₗₗ bezüglich eines Soll-Drehmoments des Motors 24 des Bremskraftverstärkers zumindest unter Berücksichtigung des festgelegten Soll-Drehgeschwindigkeitssignals ωₛₒₗₗ und einer Drehgeschwindigkeit-Drehmoment-Kennlinie 26 des Motors festgelegt. Das hier beschriebene Verfahren kann auch mittels einer PI-Steuerung (PI-Controller) ausgeführt werden. Bevorzugter Weise wird das Soll-Drehmomentsignal Mₛₒₗₗ bezüglich des Soll-Drehmoments des Motors 24 des Bremskraftverstärkers unter zusätzlicher Berücksichtigung eines aktuell gemessenen/festgelegten Ist-Drehgeschwindigkeitssignal ωᵢₛₜ (bezüglich einer Ist-Drehgeschwindigkeit) des Motors 24 des Bremskraftverstärkers festgelegt. Insbesondere kann das Soll-Drehmomentsignal Mₛₒₗₗ unter Berücksichtigung einer Differenz zwischen dem Soll-Drehmomentsignal ωₛₒₗₗ und dem Ist-Drehgeschwindigkeitssignal ωᵢₛₜ festgelegt werden. In der Regel weist ein Bremskraftverstärker eine Sensorik zum Ermitteln seiner aktuellen Drehgeschwindigkeit, bzw. eines entsprechenden Ist-Drehgeschwindigkeitssignal ωᵢₛₜ, auf. Somit kann zum Ausführen des hier beschriebenen Verfahrens auf eine bereits an dem Bremskraftverstärker generell vorhandene Elektronik zurückgegriffen werden.

In einer bevorzugten Ausführungsform wird als Ansteuersignal 20 ein Ansteuerstromsignal des Motors 24 des Bremskraftverstärkers unter Berücksichtigung des festgelegten Soll-Drehmomentsignals Mₛₒₗₗ und einer Stromversorgung-Drehmoment-Kennlinie 28 des Motors 24 festgelegt. Zum Festlegen des Ansteuerstromsignals kann auch eine Motor-Steuerung (Motor-Controller) genutzt werden.

Das Bestromen des Motors 24 mit dem Ansteuerstromsignal/Ansteuersignal 20 bewirkt eine Ist-Drehgeschwindigkeit ωᵢₛₜ des Motors ungleich Null. (Die Ist-Drehgeschwindigkeit des Motors 24 ist auch mit der Beziehung dϕ/dt umschreibbar, wobei ϕ ein Verstellwinkel des Motors ist.) Das fortlaufende Drehen des Motors 24 bewirkt einen Drehwinkel ϕ ungleich Null, wie in Fig. 1 mittels des Integrals 29 wiedergegeben ist. Das Drehen des Motors 24 bewirkt über das Getriebe 23 auch einen Kolbenweg sₖ ungleich Null, um welchen der mindestens eine verstellbare Kolben des Hauptbremszylinders 10, z.B. ein Stangenkolben und/oder ein Schwimmkolben, aus seiner jeweiligen Ausgangsposition (bei einem Bremsdruck von etwa Null) verstellt wird. Durch das Verstellen des mindestens einen Kolbens um den Kolbenweg sₖ kann der in dem Hauptbremszylinder 10 und mindestens einem angebundenen Bremskreis mit mindestens einem Radbremszylinder vorliegende Bremsdruck p gesteigert werden.

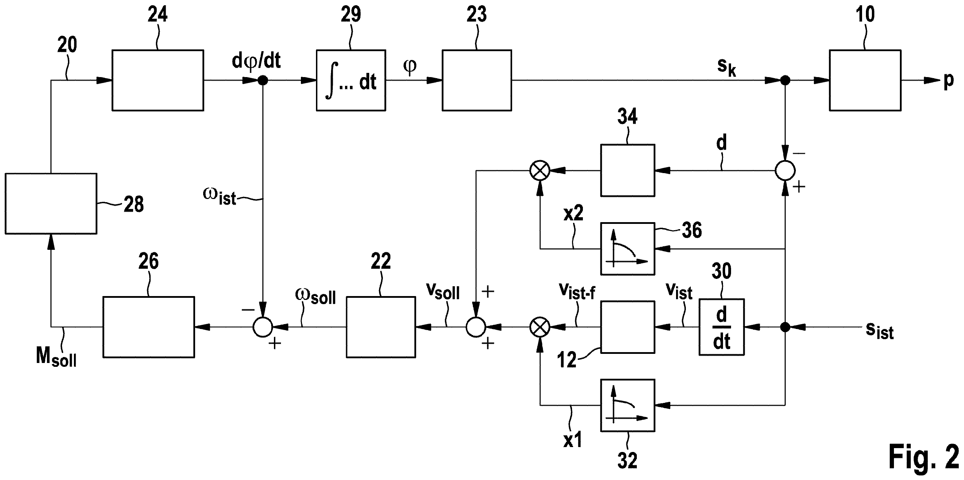

Fig. 2 zeigt eine schematische Darstellung einer zweiten Ausführungsform des Verfahrens zum Betreiben eines Bremskraftverstärkers.

Auch bei dem Verfahren der Fig. 2 wird das Ist-Verstellgeschwindigkeitssignal vᵢₛₜ anhand eines gemessenen Verstellwegs der Eingangsstange/eines entsprechenden Verstellwegsignals sᵢₛₜ festgelegt. Vorzugsweise ist das Ist-Verstellgeschwindigkeitssignal vᵢₛₜ eine zeitliche Differenz/Ableitung des Verstellwegsignals sᵢₛₜ des Verstellwegs der Eingangsstange. Dazu kann beispielsweise eine Differenziereinheit 30 eingesetzt werden. Mittels des mindestens einen Filters 12 wird ein gefiltertes Ist-Verstellgeschwindigkeitssignal v_{ist-f} bereitgestellt.

Außerdem kann unter Berücksichtigung des Verstellwegsignals sᵢₛₜ und einer ersten Gewichtungslinie 32 ein erster Gewichtungsfaktor x1 festgelegt werden, welcher ebenfalls bei der Festlegung des Soll-Verstellgeschwindigkeitssignals vₛₒₗₗ berücksichtigt wird. Insbesondere bei extremen Werten des Verstellwegsignals sᵢₛₜ kann somit auch auf ein Regeln des Bremskraftverstärkers unter Berücksichtigung der Verstellgeschwindigkeit der Eingangsstange/des Ist-Verstellgeschwindigkeitssignals vᵢₛₜ verzichtet werden.

Beispielsweise kann der Bremskraftverstärker bei der Ausführungsform der Fig. 2 auch unter Berücksichtigung eines Differenzwegs zwischen einem Kolbenweg des mindestens einen verstellbaren Kolbens des Hauptbremszylinders 10 und dem Verstellweg der Eingangsstange/eines entsprechenden Differenzwegsignals d geregelt werden. Das Differenzwegsignal d wird beispielsweise als Differenz des Verstellwegsignals sᵢₛₜ von dem Kolbenwegsignal sk festgelegt. Anschließend kann das Differenzwegsignals d mittels eines Filters 34 gefiltert werden. Unter Berücksichtigung des Verstellwegsignals sᵢₛₜ und einer zweiten Gewichtungslinie 36 wird ein zweiter Gewichtungsfaktor x2 festgelegt, mit welchem das (gefilterte) Differenzwegsignal d multipliziert wird.

Das Produkt aus dem (gefilterten) Differenzwegsignal d und dem zweiten Gewichtungsfaktor x2 wird danach zu einem Produkt des Ist-Verstellgeschwindigkeitssignals vᵢₛₜ und dem ersten Gewichtungsfaktor x1 addiert. Die auf diese Weise gewonnene Summe kann anschließend zum Festlegen des Soll-Verstellgeschwindigkeitssignal vₛₒₗₗ gemäß der oben beschriebenen Vorgehensweise ausgewertet werden. Auch die weiteren oben beschriebenen Verfahrensschritte zum Ansteuern des Motors des Bremskraftverstärkers sind mittels der Ausführungsform der Fig. 2 ausführbar. Auf ihre erneute Beschreibung wird hier verzichtet.

Die Ausführungsform der Fig. 2 ermöglicht als Weiterbildung zusätzlich eine Kompensation eines Offsets des Kolbenwegs durch das Festlegen der Geschwindigkeit des Bremskraftverstärkers. Außerdem kann die Ausführungsform der Fig. 2 auch auf extreme/unwahrscheinliche Werte des ermittelten Verstellwegsignals sᵢₛₜ vorteilhaft reagieren. Auf diese Weise ist ein guten/standardgemäßes Bremsbetätigungsgefühl/Pedalgefühl für den Fahrer realisierbar.

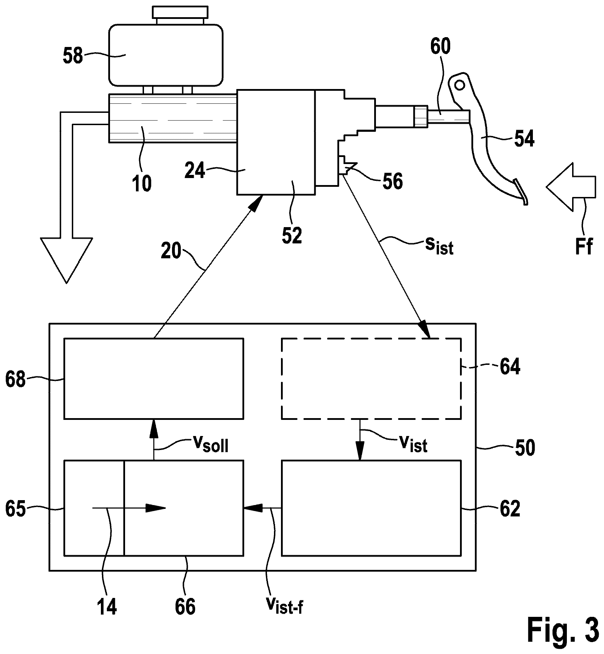

Fig. 3 zeigt eine schematische Darstellung einer Ausführungsform der Steuervorrichtung.

Die in Fig. 3 dargestellte Steuervorrichtung 50 ist zum Steuern eines Bremskraftverstärkers 52 eines Fahrzeugs ausgelegt. Die Steuervorrichtung 50 kann insbesondere dazu ausgelegt sein, die Verfahrensschritte der oben beschriebenen Verfahren auszuführen. Es wird jedoch darauf hingewiesen, dass die Ausführbarkeit der oben beschriebenen Verfahren nicht auf das Einsetzen der im Weiteren beschriebenen Steuervorrichtung 50 limitiert ist. Außerdem kann die Steuervorrichtung 50 auch dazu ausgelegt sein, andere Verfahrensschritte als die oben beschriebenen auszuführen.

Der in Fig. 3 dargestellte Bremskraftverstärker 52 ist über eine mechanische Anbindung an ein Bremsbetätigungselement 54, z.B. ein Bremspedal, angebunden. Der Bremskraftverstärker 52 hat einen (elektrischen) Motor 24 mit einem nicht weiter ausgeführten Getriebe, über welches der ebenfalls mechanisch über ein nicht wiedergegebenes Getriebe angekoppelte mindestens eine verstellbare Kolben des Hauptbremszylinders 10 verschoben werden kann. Mittels eines schematisch wiedergegebenen Sensors 56 kann ein Verstellweg einer Eingangsstange 60 gemessen werden, mittels welcher eine auf das Bremsbetätigungselement 54 ausgeübte Fahrerbremskraft Ff auch auf den mindestens einen verstellbaren Kolben des Hauptbremszylinders 10 übertragbar ist. Mittels der im Weiteren beschriebenen Steuervorrichtung 50 kann der Bremskraftverstärker 52 so angesteuert werden, dass der mit einem Bremsflüssigkeitsbehälter 58 verbundene Hauptbremszylinder 10 entsprechend einer Bremsbetätigung/Fahrerfußbewegung schnell, präzise und gezielt abgestimmt nachgeführt wird.

Die Steuervorrichtung 50 umfasst eine Filtereinrichtung 62, an welche ein Ist-Verstellgeschwindigkeitssignal vᵢₛₜ bezüglich einer Ist-Verstellgeschwindigkeit der Eingangsstange 60 bereitstellbar ist, und mittels welcher hochfrequente und/oder niederfrequente Signalanteile aus dem bereitgestellten Ist-Verstellgeschwindigkeitssignal vᵢₛₜ herausfilterbar sind. Die Filtereinrichtung 62 kann beispielsweise einen Glättungsfilter, einen Bandpassfilter, einen Kreuzbandfilter, einen Hochpassfilter und/oder einen Tiefpassfilter umfassen. Das Ist-Verstellgeschwindigkeitssignal vᵢₛₜ kann insbesondere mittels einer Differenziereinrichtung 64 der Steuervorrichtung 50 erfolgen, welche dazu ausgelegt ist, das Ist-Verstellgeschwindigkeitssignal vᵢₛₜ anhand eines von dem Sensor 56 ausgegebenen Verstellwegsignals sᵢₛₜ festzulegen. Zum Breitstellen des Ist-Verstellgeschwindigkeitssignals vᵢₛₜ kann jedoch auch eine extern von der Steuervorrichtung 50 angeordnete Rechnereinheit genutzt werden. (Das gemessene Verstellwegsignals sᵢₛₜ kann z.B. numerisch in das Ist-Verstellgeschwindigkeitssignal vᵢₛₜ umgewandelt werden.)

Die Steuervorrichtung 50 weist auch eine Auswerteeinrichtung 66 auf, mittels welcher ein Soll-Verstellgeschwindigkeitssignal vₛₒₗₗ bezüglich einer Soll-Verstellgeschwindigkeit zumindest eines mittels des Bremskraftverstärkers verstellbaren Verstärkerkolbens zumindest unter Berücksichtigung einer (z.B. mittels einer Speichereinheit 65) vorgegebenen Kennlinie 14 und des gefilterten Ist-Verstellgeschwindigkeitssignals v_{ist-f} festlegbar ist. Zusätzlich hat die Steuervorrichtung 50 eine Ansteuereinrichtung 68, mittels welcher unter Berücksichtigung des festgelegten Soll-Verstellgeschwindigkeitssignals vₛₒₗₗ ein Steuersignal 20 an den Bremskraftverstärker 52 ausgebbar ist.

Vorzugsweise ist die Ansteuereinrichtung 68 dazu ausgelegt ist, ein Soll-Drehgeschwindigkeitssignal bezüglich einer Soll-Drehgeschwindigkeit des Motors 24 des Bremskraftverstärkers 52 zumindest unter Berücksichtigung des festgelegten Soll-Verstellgeschwindigkeitssignals vₛₒₗₗ und einer Getriebe-Übersetzung-Kennlinie eines Getriebes des Bremskraftverstärkers 52 festzulegen. Außerdem kann die Ansteuereinrichtung 68 zusätzlich dazu ausgelegt sein, ein Soll-Drehmomentsignal bezüglich eines Soll-Drehmoments des Motors 24 des Bremskraftverstärkers 52 zumindest unter Berücksichtigung des festgelegten Soll-Drehgeschwindigkeitssignals und einer Drehgeschwindigkeit-Drehmoment-Kennlinie des Motors 24 festzulegen. Das Soll-Drehmomentsignal bezüglich des Soll-Drehmoments des Motors 24 des Bremskraftverstärkers kann unter zusätzlicher Berücksichtigung eines aktuell gemessenen Ist-Drehgeschwindigkeitssignals des Motors 24 des Bremskraftverstärkers 52 festgelegt werden. Bevorzugter Weise ist die Ansteuereinrichtung 68 zusätzlich dazu ausgelegt ist, als Ansteuersignal 20 ein Ansteuerstromsignal zumindest unter Berücksichtigung des festgelegten Soll-Drehmomentsignals und einer Stromversorgung-Drehmoment-Kennlinie des Motors 24 festzulegen. Die Steuervorrichtung 50 gewährleistet somit alle oben beschriebenen Vorteile.

Die in Fig. 3 dargestellte Steuervorrichtung 50 ist gut an unterschiedliche Fahrzeuge anpassbar. Sie weist eine einfache Systemstruktur auf. Außerdem hat die Steuervorrichtung 50 eine einfache und transparente Applikation.

## Patentansprüche

1. Verfahren zum Betreiben eines Bremskraftverstärkers (52) eines Fahrzeugs mit den Schritten:
Festlegen eines Ist-Verstellgeschwindigkeitssignals (vᵢₛₜ) bezüglich einer Ist-Verstellgeschwindigkeit einer Eingangsstange (60), auf welche eine auf ein Bremsbetätigungselement (54) ausgeübte Fahrerbremskraft (Ff) zumindest teilweise übertragen wird;
Festlegen eines Soll-Verstellgeschwindigkeitssignals (vₛₒₗₗ) bezüglich einer Soll-Verstellgeschwindigkeit zumindest eines mittels des Bremskraftverstärkers (52) verstellbaren Verstärkerkolbens zumindest unter Berücksichtigung des Ist-Verstellgeschwindigkeitssignals (vist); und
Festlegen eines Ansteuersignals (20) des Bremskraftverstärkers (52) zumindest unter Berücksichtigung des festgelegten Soll-Verstellgeschwindigkeitssignals (vₛₒₗₗ) und Ausgeben des festgelegten Ansteuersignals (20) an den Bremskraftverstärker (52), wodurch der Bremskraftverstärker (52) so angesteuert wird, dass zumindest der Verstärkerkolben mit einer dem Ansteuersignal (20) entsprechenden Ausführungs-Geschwindigkeit verstellt wird;
**gekennzeichnet durch**
Herausfiltern von hochfrequenten und/oder niederfrequenten Signalanteilen aus dem festgelegten Ist-Verstellgeschwindigkeitssignal (vist), wobei das Festlegen des Soll-Verstellgeschwindigkeitssignals (vₛₒₗₗ) zumindest unter Berücksichtigung des gefilterten Ist-Verstellgeschwindigkeitssignals (v_{ist-f}) und einer vorgegebenen Kennlinie, welche eine Relation der Soll-Verstellgeschwindigkeit des verstellbaren Verstärkerkolbens von der festgelegten und gefilterten Ist-Verstellgeschwindigkeit der Eingangsstange (60) ist, erfolgt.

2. Verfahren nach Anspruch 1, wobei zum Festlegen des Ansteuersignals (20) ein Soll-Drehgeschwindigkeitssignal (ωₛₒₗₗ) bezüglich einer Soll-Drehgeschwindigkeit eines Motors (24) des Bremskraftverstärkers (52) zumindest unter Berücksichtigung des festgelegten Soll-Verstellgeschwindigkeitssignals (vₛₒₗₗ) und einer Getriebe-Übersetzung-Kennlinie (22) eines Getriebes (23) des Bremskraftverstärkers (52) festgelegt wird.

3. Verfahren nach Anspruch 2, wobei zum Festlegen des Ansteuersignals (20) ein Soll-Drehmomentsignal (Mₛₒₗₗ) bezüglich eines Soll-Drehmoments des Motors (24) des Bremskraftverstärkers (52) zumindest unter Berücksichtigung des festgelegten Soll-Drehgeschwindigkeitssignals (ωₛₒₗₗ) und einer Drehgeschwindigkeit-Drehmoment-Kennlinie (26) des Motors (24) festgelegt wird.

4. Verfahren nach Anspruch 3, wobei als Ansteuersignal (20) ein Ansteuerstromsignal des Motors (24) des Bremskraftverstärkers (52) zumindest unter Berücksichtigung des festgelegten Soll-Drehmomentsignals (Mₛₒₗₗ) und einer Stromversorgung-Drehmoment-Kennlinie (28) des Motors (24) festgelegt wird.

5. Verfahren nach Anspruch 3 oder 4, wobei das Soll-Drehmomentsignal (Mₛₒₗₗ) bezüglich des Soll-Drehmoments des Motors (24) des Bremskraftverstärkers (52) unter zusätzlicher Berücksichtigung eines aktuell gemessenen Ist-Drehgeschwindigkeitssignals (ωᵢₛₜ) des Motors (24) des Bremskraftverstärkers (52) festgelegt wird.

6. Verfahren nach einem der vorhergehenden Ansprüche, wobei ein Verstellwegsignal (sᵢₛₜ) bezüglich eines Verstellwegs der Eingangsstange (60) gemessen wird und das Ist-Verstellgeschwindigkeitssignal (vᵢₛₜ) als zeitliche Differenz des Verstellwegsignals (sᵢₛₜ) festgelegt wird.

7. Verfahren nach einem der vorhergehenden Ansprüche, wobei die hochfrequenten und/oder niederfrequenten Signalanteile mittels eines Glättungsfilters, eines Bandpassfilters, eines Kreuzbandfilters, eines Hochpassfilters und/oder eines Tiefpassfilters (12) aus dem festgelegten Ist-Verstellgeschwindigkeitssignal (vᵢₛₜ) herausgefiltert werden.

8. Steuervorrichtung (50) für einen Bremskraftverstärker (52) eines Fahrzeugs mit:
einer Filtereinrichtung (62), an welche ein Ist-Verstellgeschwindigkeitssignal (vᵢₛₜ) bezüglich einer Ist-Verstellgeschwindigkeit einer Eingangsstange (60), auf welche eine auf ein Bremsbetätigungselement (54) ausgeübte Fahrerbremskraft (Ff) zumindest teilweise übertragbar ist, bereitstellbar ist, und mittels welcher hochfrequente und/oder niederfrequente Signalanteile aus dem bereitgestellten Ist-Verstellgeschwindigkeitssignal (vᵢₛₜ) herausfilterbar sind;
einer Auswerteeinrichtung (66), mittels welcher ein Soll-Verstellgeschwindigkeitssignal (vₛₒₗₗ) bezüglich einer Soll-Verstellgeschwindigkeit zumindest eines mittels des Bremskraftverstärkers (52) verstellbaren Verstärkerkolbens zumindest unter Berücksichtigung einer vorgegebenen Kennlinie (14) und des gefilterten Ist-Verstellgeschwindigkeitssignals (v_{ist-f}) festlegbar ist, wobei die vorgegebene Kennlinie (14) eine Relation der Soll-Verstellgeschwindigkeit des verstellbaren Verstärkerkolbens von der festgelegten und gefilterten Ist-Verstellgeschwindigkeit der Eingangsstange (60) ist; und
einer Ansteuereinrichtung (68), mittels welcher unter Berücksichtigung des festgelegten Soll-Verstellgeschwindigkeitssignals (vₛₒₗₗ) ein Steuersignal (20) an den Bremskraftverstärker (52) ausgebbar ist.

9. Steuervorrichtung (50) nach Anspruch 8, wobei die Ansteuereinrichtung (68) dazu ausgelegt ist, ein Soll-Drehgeschwindigkeitssignal (ωₛₒₗₗ) bezüglich einer Soll-Drehgeschwindigkeit eines Motors (24) des Bremskraftverstärkers (52) zumindest unter Berücksichtigung des festgelegten Soll-Verstellgeschwindigkeitssignals (vₛₒₗₗ) und einer Getriebe-Übersetzung-Kennlinie (22) eines Getriebes (23) des Bremskraftverstärkers (52) festzulegen.

10. Steuervorrichtung (50) nach Anspruch 9, wobei die Ansteuereinrichtung (68) zusätzlich dazu ausgelegt ist, ein Soll-Drehmomentsignal (Mₛₒₗₗ) bezüglich eines Soll-Drehmoments des Motors (24) des Bremskraftverstärkers (52) zumindest unter Berücksichtigung des festgelegten Soll-Drehgeschwindigkeitssignals (ωₛₒₗₗ) und einer Drehgeschwindigkeit-Drehmoment-Kennlinie (26) des Motors (24) festzulegen.

11. Steuervorrichtung (50) nach Anspruch 10, wobei die Ansteuereinrichtung (68) zusätzlich dazu ausgelegt ist, als Ansteuersignal (20) ein Ansteuerstromsignal des Motors (24) des Bremskraftverstärkers (52) zumindest unter Berücksichtigung des festgelegten Soll-Drehmomentsignals (Mₛₒₗₗ) und einer Stromversorgung-Drehmoment-Kennlinie (28) des Motors (24) festzulegen.

12. Steuervorrichtung (50) nach Anspruch 10 oder 11, wobei die Ansteuereinrichtung (68) zusätzlich dazu ausgelegt ist, das Soll-Drehmomentsignal (Mₛₒₗₗ) bezüglich des Soll-Drehmoments des Motors (24) des Bremskraftverstärkers (52) unter zusätzlicher Berücksichtigung eines aktuell gemessenen Ist-Drehgeschwindigkeitssignals (ωᵢₛₜ) des Motors (24) des Bremskraftverstärkers (52) festzulegen.

13. Steuervorrichtung (50) nach einem der Ansprüche 8 bis 12, wobei die Filtereinrichtung (62) einen Glättungsfilter, einen Bandpassfilter, einen Kreuzbandfilter, einen Hochpassfilter und/oder einen Tiefpassfilter (12) umfasst.

14. Bremskraftverstärker (52) für ein Bremssystem eines Fahrzeugs mit:
einer Steuervorrichtung (50) nach einem der Ansprüche 8 bis 13.

15. Bremssystem für ein Fahrzeug mit:
einer Steuervorrichtung (50) nach einem der Ansprüche 8 bis 13.

## Claims

1. Method for operating a brake booster (52) of a vehicle, having the steps:
defining an actual adjustment speed signal (vist) relating to an actual adjustment speed of an input rod (60) to which a driver braking force (F_{f}) exerted on a brake actuating element (54) is at least partially transmitted;
defining a setpoint adjustment speed signal (vₛₒₗₗ) relating to a setpoint adjustment speed of at least one booster piston, which is adjustable by means of the brake booster (52), at least taking into consideration the actual adjustment speed signal (vᵢₛₜ) ; and
defining an actuation signal (20) of the brake booster (52) at least taking into consideration the defined setpoint adjustment speed signal (vₛₒₗₗ), and outputting the defined actuation signal (20) to the brake booster (52), whereby the brake booster (52) is actuated such that at least the booster piston is adjusted with an execution speed corresponding to the actuation signal (20);
**characterized by**
filtering out high-frequency and/or low-frequency signal components from the defined actual adjustment speed signal (vᵢₛₜ), wherein the definition of the setpoint adjustment speed signal (vₛₒₗₗ) is performed at least taking into consideration the filtered actual adjustment speed signal (v_{ist-f}) and a predefined characteristic curve which is a relationship of the setpoint adjustment speed of the adjustable booster piston and the defined and filtered actual adjustment speed of the input rod (60) .

2. Method according to Claim 1, wherein, for the definition of the actuation signal (20), a setpoint rotational speed signal (ωₛₒₗₗ) relating to a setpoint rotational speed of a motor (24) of the brake booster (52) is defined at least taking into consideration the defined setpoint adjustment speed signal (vₛₒₗₗ) and a gearing transmission ratio characteristic curve (22) of a gearing (23) of the brake booster (52).

3. Method according to Claim 2, wherein, for the definition of the actuation signal (20), a setpoint torque signal (Mₛₒₗₗ) relating to a setpoint torque of the motor (24) of the brake booster (52) is defined at least taking into consideration the defined setpoint rotational speed signal (ωₛₒₗₗ) and a rotational speed-torque characteristic curve (26) of the motor (24).

4. Method according to Claim 3, wherein, as actuation signal (20), an actuation current signal of the motor (24) of the brake booster (52) is defined at least taking into consideration the defined setpoint torque signal (Mₛₒₗₗ) and a current supply-torque characteristic curve (28) of the motor (24).

5. Method according to Claim 3 or 4, wherein the setpoint torque signal (Mₛₒₗₗ) relating to the setpoint torque of the motor (24) of the brake booster (52) is defined additionally taking into consideration a presently measured actual rotational speed signal (ωᵢₛₜ) of the motor (24) of the brake booster (52).

6. Method according to one of the preceding claims, wherein an adjustment travel signal (sᵢₛₜ) relating to an adjustment travel of the input rod (60) is measured, and the actual adjustment speed signal (vist) is defined as a difference with respect to time of the adjustment travel signal (sist).

7. Method according to one of the preceding claims, wherein the high-frequency and/or low-frequency signal components are filtered out of the defined actual adjustment speed signal (vist) by means of a smoothing filter, a bandpass filter, a cross-band filter, a high-pass filter and/or a low-pass filter (12) .

8. Control device (50) for a brake booster (52) of a vehicle, having:
a filter device (62), to which an actual adjustment speed signal (vist) relating to an actual adjustment speed of an input rod (60) to which a driver braking force (Ff) exerted on a brake actuating element (54) is at least partially transmitted can be provided and by means of which high-frequency and/or low-frequency signal components can be filtered out of the provided actual adjustment speed signal (vist);
an evaluating device (66) by means of which a setpoint adjustment speed signal (vₛₒₗₗ) relating to a setpoint adjustment speed of at least one booster piston which is adjustable by means of the brake booster (52) can be defined at least taking into consideration a predefined characteristic curve (14) and the filtered actual adjustment speed signal (v_{ist-f}), wherein the predefined characteristic curve (14) is a relationship of the setpoint adjustment speed of the adjustable booster piston and the defined and filtered actual adjustment speed of the input rod (60); and
an actuating device (68) by means of which, taking into consideration the defined setpoint adjustment speed signal (vₛₒₗₗ), a control signal (20) can be output to the brake booster (52).

9. Control device (50) according to Claim 8, wherein the actuating device (68) is designed to define a setpoint rotational speed signal (ωₛₒₗₗ) relating to a setpoint rotational speed of a motor (24) of the brake booster (52) at least taking into consideration the defined setpoint adjustment speed signal (vₛₒₗₗ) and a gearing transmission characteristic curve (22) of a gearing (23) of the brake booster (52).

10. Control device (50) according to Claim 9, wherein the actuating device (68) is additionally designed to define a setpoint torque signal (Mₛₒₗₗ) relating to a setpoint torque of the motor (24) of the brake booster (52) at least taking into consideration the defined setpoint rotational speed signal (ωₛₒₗₗ) and a rotational speed-torque characteristic curve (26) of the motor (24).

11. Control device (50) according to Claim 10, wherein the actuating device (68) is additionally designed to define, as actuation signal (20), an actuation current signal of the motor (24) of the brake booster (52) at least taking into consideration the defined setpoint torque signal (Mₛₒₗₗ) and a current supply-torque characteristic curve (28) of the motor (24) .

12. Control device (50) according to Claim 10 or 11, wherein the actuating device (68) is additionally designed to define the setpoint torque signal (Mₛₒₗₗ) relating to the setpoint torque of the motor (24) of the brake booster (52) additionally taking into consideration a presently measured actual rotational speed signal (ωᵢₛₜ) of the motor (24) of the brake booster (52).

13. Control device (50) according to any of Claims 8 to 12, wherein the filter device (62) comprises a smoothing filter, a bandpass filter, a cross-band filter, a high-pass filter and/or a low-pass filter (12) .

14. Brake booster (52) for a brake system of a vehicle, having:
a control device (50) according to any of Claims 8 to 13.

15. Brake system for a vehicle, having:
a control device (50) according to any of Claims 8 to 13.

## Revendications

1. Procédé, destiné à faire fonctionner un servofrein (52) d'un véhicule, comportant les étapes consistant à :
déterminer un signal de vitesse réelle de réglage (vist) concernant une vitesse réelle de réglage d'une tige d'entrée (60), sur laquelle est transmise au moins partiellement une force de freinage du conducteur (Ff) exercée sur un élément d'actionnement de frein (54) ;
déterminer un signal de vitesse théorique de réglage (vₛₒₗₗ) concernant une vitesse théorique de réglage d'au moins un piston amplificateur réglable au moyen du servofrein (52), au moins en considérant le signal de vitesse réelle de réglage (vist) ; et
déterminer un signal d'activation (20) du servofrein (52), au moins en considérant le signal de vitesse théorique de réglage (vₛₒₗₗ) déterminé et délivrer le signal d'activation (20) déterminé au servofrein (52), suite à quoi, le servofrein (52) est activé de telle sorte qu'au moins le piston amplificateur soit réglé à une vitesse d'exécution correspondant au signal d'activation (20) ;
**caractérisé par**
un filtrage de fractions de signal haute fréquence et/ou basse fréquence à partir du signal de vitesse réelle de réglage (vist) déterminé, la détermination du signal de vitesse théorique de réglage (vₛₒₗₗ) ayant lieu au moins en considérant le signal de vitesse réelle de réglage filtré (v_{ist-f}) et une courbe caractéristique prédéfinie, qui est une relation de la vitesse théorique de réglage du piston amplificateur réglable à la vitesse réelle de réglage déterminée et filtrée de la tige d'entrée (60) .

2. Procédé selon la revendication 1, pour déterminer le signal d'activation (20), un signal de régime théorique (ωₛₒₗₗ) concernant un régime théorique d'un moteur (24) du servofrein (52) étant déterminé, au moins en considérant le signal de vitesse théorique de réglage (vₛₒₗₗ) déterminé et une courbe caractéristique (22) rapport de vitesse-transmission (23) du servofrein (52).

3. Procédé selon la revendication 2, pour déterminer le signal d'activation (20), un signal de couple théorique (Mₛₒₗₗ) concernant un couple théorique du moteur (24) du servofrein (52) étant déterminé au moins en considérant le signal de régime théorique (ωₛₒₗₗ) déterminé et une courbe caractéristique régime-couple (26) du moteur (24).

4. Procédé selon la revendication 3, en tant que signal d'activation (20) étant déterminé un signal de courant d'activation du moteur (24) du servofrein (52), au moins en considérant le signal de couple théorique (Mₛₒₗₗ) déterminé et une courbe caractéristique alimentation électrique-couple (28) du moteur (24).

5. Procédé selon la revendication 3 ou 4, le signal de couple théorique (Mₛₒₗₗ) concernant le couple théorique du moteur (24) du servofrein (52) étant déterminé en considérant en outre un signal de régime réel (ωᵢₛₜ) du moteur (24) du servofrein (52) actuellement mesuré.

6. Procédé selon l'une quelconque des revendications précédentes, un signal de course de réglage (sᵢₛₜ) concernant une course de réglage de la tige d'entrée (60) étant mesuré et le signal de vitesse réelle de réglage (vist) étant déterminé comme différence dans le temps du signal de course de réglage (sist).

7. Procédé selon l'une quelconque des revendications précédentes, les fractions de signal haute fréquence et/ou basse fréquence étant filtrées à partir du signal de vitesse réelle de réglage (vᵢₛₜ) au moyen d'un filtre de lissage, d'un filtre passe-bande, d'un filtre croise-bande, d'un filtre passe-haut et/ou d'un filtre passe-bas (12).

8. Dispositif de commande (50), destiné à un servofrein (52) d'un véhicule, comportant :
un système de filtrage (62) à la disposition duquel peut être mis un signal de vitesse réelle de réglage (vᵢₛₜ) concernant une vitesse réelle de réglage d'une tige d'entrée (60), sur laquelle est transmissible au moins partiellement une force de freinage du conducteur (Ff) exercée sur un élément d'actionnement de frein (54), et au moyen duquel des fractions de signal haute fréquence et/ou basse fréquence peuvent être filtrées à partir du signal de vitesse réelle de réglage (vist) ;
un système d'évaluation (66), au moyen duquel un signal de vitesse théorique de réglage (vₛₒₗₗ) concernant une vitesse théorique de réglage d'au moins un piston amplificateur réglable au moyen du servofrein (52) peut être déterminé, au moins en considérant une courbe caractéristique (14) prédéfinie et le signal de vitesse réelle de réglage filtré (vi_{st-f}), la courbe caractéristique (14) prédéfinie étant une relation de la vitesse théorique de réglage du piston amplificateur réglable à la vitesse réelle de réglage déterminée et filtrée de la tige d'entrée (60) ; et
un système d'activation (68), au moyen duquel, en considérant le signal de vitesse théorique de réglage (vₛₒₗₗ) déterminé, un signal de commande (20) peut être délivré au servofrein (52).

9. Dispositif de commande (50) selon la revendication 8, le système d'activation (68) étant conçu pour déterminer un signal de régime théorique (ωₛₒₗₗ) concernant un régime théorique d'un moteur (24) du servofrein (52), au moins en considérant le signal de vitesse théorique de réglage (vₛₒₗₗ) déterminé et une courbe caractéristique rapport de vitesse-transmission (22) d'une transmission (23) du servofrein (52).

10. Dispositif de commande (50) selon la revendication 9, le système d'activation (68) étant conçu en supplément pour déterminer un signal de couple théorique (Mₛₒₗₗ) concernant un couple théorique du moteur (24) du servofrein (52), au moins en considérant le signal de régime théorique (ωₛₒₗₗ) déterminé et une courbe caractéristique régime-couple (26) du moteur (24).

11. Dispositif de commande (50) selon la revendication 10, le système d'activation (68) étant conçu en supplément pour déterminer en tant que signal d'activation (20) un signal de courant d'activation du moteur (24) du servofrein (52), au moins en considérant le signal de couple théorique (Mₛₒₗₗ) déterminé et une courbe caractéristique alimentation électrique-couple (28) du moteur (24).

12. Dispositif de commande (50) selon la revendication 10 ou 11, le système d'activation (68) étant conçu en supplément pour déterminer le signal de couple théorique (Mₛₒₗₗ) concernant le couple théorique du moteur (24) du servofrein (52), en considérant en outre un signal de régime réel (ωᵢₛₜ) du moteur (24) du servofrein (52).

13. Dispositif de commande (50) selon l'une quelconque des revendications 8 à 12, le système de filtrage (62) comprenant un filtre de lissage, un filtre passe-bande, un filtre croise-bande, un filtre passe-haut et/ou un filtre passe-bas (12).

14. Servofrein (52), destiné à un système de freinage d'un véhicule, comportant :
un dispositif de commande (50) selon l'une quelconque des revendications 8 à 13.

15. Système de freinage d'un véhicule, comportant :
un dispositif de commande (50) selon l'une quelconque des revendications 8 à 13.
